(19) Europäisches Patentamt / European Patent Office / Office européen des brevets

(11) **EP 2 840 744 A1**

(12) **EUROPEAN PATENT APPLICATION**
published in accordance with Art. 153(4) EPC

(43) Date of publication:
**25.02.2015 Bulletin 2015/09**

(21) Application number: **13778705.7**

(22) Date of filing: **12.04.2013**

(51) Int Cl.:
**H04L 12/721** (2013.01)   **H04L 12/66** (2006.01)

(86) International application number:
**PCT/JP2013/002507**

(87) International publication number:
**WO 2013/157234 (24.10.2013 Gazette 2013/43)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **16.04.2012   JP 2012092798**

(71) Applicant: **NEC Corporation
Tokyo 108-8001 (JP)**

(72) Inventors:
• **NISHIOKA, Itaru**
  **Tokyo 108-8001 (JP)**
• **HAYASHITANI, Masahiro**
  **Tokyo 108-8001 (JP)**

(74) Representative: **Reeve, Nicholas Edward
  Reddie & Grose LLP
  16 Theobalds Road
  London WC1X 8PL (GB)**

(54) **METHOD AND DEVICE FOR CONTROLLING NETWORK**

(57)   The present invention provides a network control method and device that enable efficient and flexible transmission of user traffic through a network. The network control device (100) collects a network state in a network (WAN 10) through an edge device (300). On the basis of the network state, the network control device (100) guides traffic transmitted from a user site (20), thorough the edge device to a specific route in the network or a specific receiving end.

Fig. 1

**Description**

[Technical Field]

This application is based upon and claims the benefit of priority from Japanese Patent Application No. 2012-092798, filed on April 16, 2012, the disclosure of which is incorporated herein in its entirety by reference.
The present invention relates to a network control technique, and particularly to a network control method and device for controlling user traffic.

[Background Art]

In this technical field, a user who receives a communication service via a wide area network (WAN) generally aggregates communication traffic amounts of various application software used by the user itself, and on the basis of this aggregated value, signs a contract about a use band with a communication service provider.
For example, a company having a plurality of bases estimates a communication traffic amount between respective bases, and uses a dedicated line service or a virtual private network (VPN) service of a communication service provider. In addition, a dedicated line service or a VPN service is used in order that a company or an organization managing a plurality of data centers enables transmission and reception of data between the data centers. According to a dedicated line service, it is possible to receive a service in which quality is guaranteed by a dedicatedly secured communication resource. Meanwhile, according to a dedicated line service, a charge for using a communication service is generally expensive.
Meanwhile, according to a VPN, a communication resource shared by another user can be used as if the shared resource is a dedicated line, which results in low cost. Examples of such a VPN include the IP-VPN, the Layer2 VPN (L2VPN), and the like. In the IP-VPN, a virtual network is constructed on a packet network. According to such a packet-based VPN, a communication resource is shared with another user, so that communication quality can be degraded compared with a dedicated line service. However, according to the packet-based VPN, a traffic statistical multiple effect can be expected among a plurality of users, so that communication cost becomes low.
A packet-based VPN communication system is provided generally by an IP/IP/MPLS router or an Ethernet (Ethernet is the registered trademark) switch. Control software incorporated in these devices controls a VPN service. Such control software exchanges control information between devices each other to obtain information of the neighboring device and topology information, and controls a route to a destination device. According to such a VPN communication system, an upper limit is set for a traffic amount from a user such that traffic larger than an expected amount does not flow into a WAN. Further, according to such a VPN communication system, an edge device in the WAN shapes traffic to secure contracted communication quality.
As a traffic managing technique that uses a VPN, in Patent Literature 1, for example, there is disclosed a routing device of a system used in connection between LANs. Concretely, Patent Literature 1 describes that connection lines having band speeds different from each other are bundled so that at the total band speed, network communication is performed to enable efficient transmission and reception of packets.
Patent Literature 2 discloses a connection state managing server that manages connection between VPNs. The connection state managing server collects band information of a route used in connection between VPNs, and application information used by a terminal user. On the basis of the collected information, the connection state managing server creates setting information of application software depending on a band of the route used in connection between the VPNs. This server provides the thus-created setting information to a terminal under each VPN to reduce a burden for setting at the terminal.

[Citation List]

[Patent Literature]

[PTL 1] Patent Literature 1: Japanese Laid-open Patent Publication No. 2003-338843
[PTL 2] Patent Literature 2: Japanese Laid-open Patent Publication No. 2011-176467

[Summary of Invention]

[Technical Problem]

However, the above-described control system and the techniques described in Patent Literatures 1 and 2 have the following problems.

First, when traffic of each user exceeds a contracted band, the traffic of each user is discarded by a traffic shaper in a communication network. For this reason, even when a band of a communication link has a vacancy, a user cannot transmit burst traffic outside the contracted band.

Secondly, even when a traffic statistical multiple effect between users is taken into account, a peak band contracted by each user needs to be guaranteed. Accordingly, in most cases, a rate of using the communication link becomes greatly low.

Thirdly, when a new path is set to a new communication destination on demand, incorporated control software needs to control all of communication devices on a route. Accordingly, it takes time to set a communication path. Even when a traffic amount is predicted for preparation to set the communication path swiftly, it is greatly difficult to actually predict a traffic amount.

The present invention provides the means for solving the above-described problems, and an object of the present invention is to provide a network control method and device that enable efficient and flexible transmission of user traffic through a network.

[Solution to Problem]

A network control device according to the present invention is a network control device that controls an edge device of a network connected to each of a plurality of user sites, the network control device including: network state collecting means for collecting a network state in the network through the edge device; and traffic guiding means for guiding, on the basis of the network state, traffic transmitted from a user site through the edge device to a specific route in the network or a specific receiving end. A network control method according to the present invention is a network control method for controlling an edge device of a network connected to each of a plurality of user sites, the network control method including: collecting, by network state collecting means, a network state in the network through the edge device; and guiding, by traffic guiding means, on the basis of the network state, traffic transmitted from a user site through the edge device to a specific route in the network or a specific receiving end.

[Advantageous Effects of Invention]

An exemplary advantage according to the invention, it becomes possible to efficiently and flexibly transmit user traffic through a network.

[Brief Description of Drawings]

[Fig.1] Fig. 1 is a configuration diagram of a network system according to one exemplary embodiment of the present invention.
[Fig.2] Fig. 2 is a block diagram depicting a configuration of a WAN control device according to the exemplary embodiment.
[Fig.3] Fig. 3 is a block diagram depicting a configuration of a user control device according to the exemplary embodiment.
[Fig.4] Fig. 4 includes schematic diagrams for depicting a topology constructing method in the exemplary embodiment, in which Fig. 4A is a network diagram depicting route information and topology, Fig. 4B depicts one example of route information of paths, and Fig. 4C depicts topology and its information.
[Fig.5] Fig. 5 is a flowchart depicting a topology constructing procedure in Figs. 4.
[Fig.6] Fig. 6A is a network diagram depicting a method for obtaining quality information in the exemplary embodiment, and Fig. 6B depicts one example of performance information of paths.
[Fig.7] Fig. 7 is a flowchart depicting a method for obtaining quality information in the exemplary embodiment.
[Fig.8] Fig. 8 is a flowchart depicting a method for calculating a remaining band in the exemplary embodiment.
[Fig.9] Fig. 9 is a block diagram depicting a network to which the exemplary embodiment has been applied.
[Fig.10] Fig. 10 is schematic diagrams depicting path configuration examples in a network to which the exemplary embodiment has been applied.

[Description of Embodiments]

According to an exemplary embodiment of the present invention, a network control device collects network state information from an edge device of a network. On the basis of the network state, the network control device guides, to a specific route in the network or a specific receiving end, traffic transmitted from a user side. Thereby, in accordance with the network state, user traffic can be flexibly transmitted through the network, and use of a band of a WAN can be maximized. Further, while the network edge device is controlled, it is not necessary to control all of communication devices on the route, whereby switching control time can be greatly reduced. In the following, the exemplary embodiment of the present invention is described in detail with reference to the drawings.

1. System Configuration

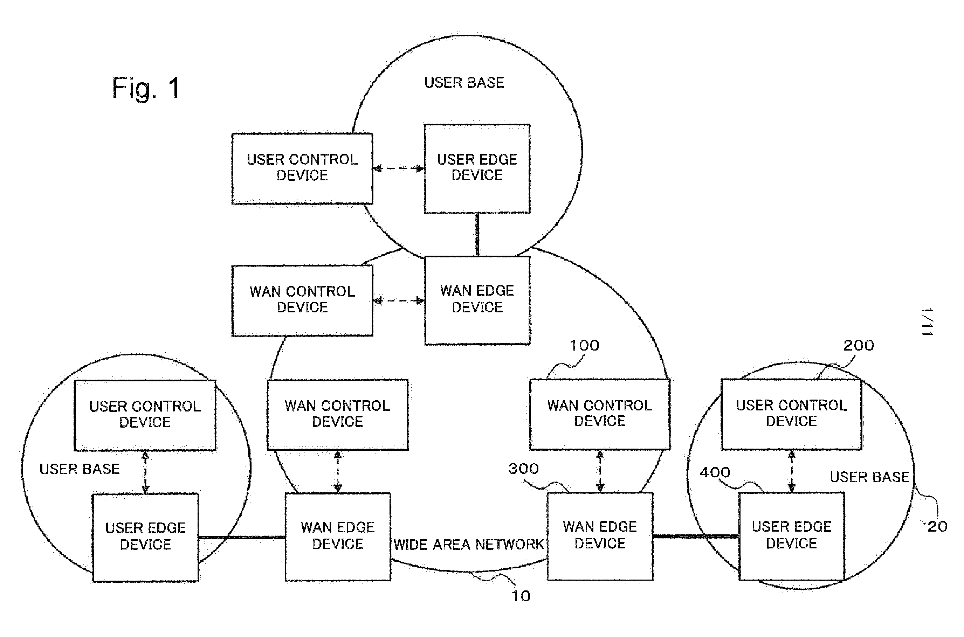

As illustrated in Fig. 1, a network system of the present invention includes a wide area network (WAN) 10 that connects respective user bases with each other, the bases being arranged over a geographically wide range, and a plurality of the user bases (user sites) 20 that are connected to each other via the WAN 10. The WAN 10 and each user base 20 are connected to each other via a WAN edge device 300 and a user edge device 400.
The WAN edge device 300 receives traffic transmitted by the user edge device 400. The WAN edge device 300 forwards the traffic to another user base 20 through the WAN 10. As a method for forwarding the traffic at the WAN edge device 300 and the user edge device 400, there are a packet-based forwarding method by IP, multi-protocol label switching (MPLS), Ethernet, and the like, and a path-based forwarding method by Optical Data Unit (ODU) that is a data frame of an optical transport network (OTN), or by switching of an optical path by an optical switch in wavelength units. The WAN edge device 300 and the user edge device 400 are controlled by a WAN control device 100 and a user control device 200 connected thereto, respectively.

1.1) WAN Control Device (Network Control Device)

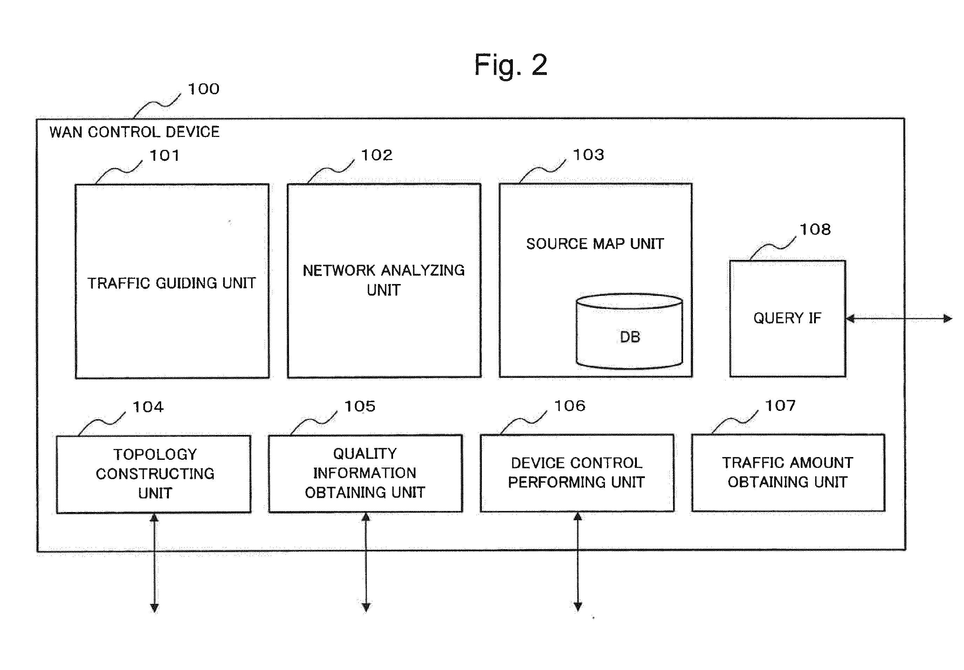

As illustrated in Fig. 2, the WAN control device 100 includes a traffic guiding unit 101, a network analyzing unit 102, and a source map unit 103. The WAN control device 100 further includes a topology constructing unit 104 including a communication interface to an outside device, a quality information obtaining unit 105, a device control performing unit 106, a traffic amount obtaining unit 107, and a query interface (query I/F) 108.
The traffic guiding unit 101 has a function of determining one or a plurality of traffic route candidates to the specific user edge device, and switching the traffic route to the user edge device. The route candidates are calculated by the network analyzing device 102, and stored as path information in a database (DB) of the source map unit 103. In addition, the traffic guiding unit 101 has a function of responding to a query from the user control device. The traffic guiding unit 101 sends, as a reply, the path candidate to a designated destination together with additional information such as quality.
The network analyzing unit 102 calculates N-number (N is a natural number) of traffic route candidates in accordance with a network state of the WAN 10 that changes in time and is stored in the database of the source map unit 103. This calculation of route candidates is performed at fixed intervals or when an event such as a failure occurs. The route candidates are determined from a route in which a one-way delay is less, a route in which a bidirectional round trip delay is less, a route having the largest vacant band, or a route having the largest redundancy, for example.
The source map unit 103 has a function of storing a network state of the WAN 10 that changes in time, one or a plurality of traffic route candidates that are directed to all of the other user edge devices from the user edge device concerned arranged so as to face the WAN edge device, and quality information of the respective routes. The source map unit 103 further has a function of synchronizing information between a database (DB) of a station of the source map unit 103 itself and a database (DB) of the source map unit of another WAN control device. As will be described later, the database (DB) of the source map unit 103 can hold information of network configurations of a plurality of WANs (such as a packet network and a circuit switched network having layers different from each other, for example).
The topology constructing unit 104 has a function of creating information concerning a configuration of the entire WAN 10 on the basis of information collected from each WAN edge device. The topology constructing unit 104 registers, in the database of the source map unit 103, the created information concerning the entire WAN 10.
The quality information collecting unit 105 collects performance information concerning paths on a plurality of routes between the WAN edge devices. The performance information includes one-way/round-trip delay information of a path, packet loss information, and the like. Such performance information can be collected by an operation-administration-maintenance (OAM) function of the WAN edge device 300. As such an OAM function, there are MPLS OAM used in an MPLS network, and Ethernet OAM used in Ethernet.
The device control performing unit 106 performs setting or changing of connection of a path set in the WAN 10 or connection between the user control devices. The device control performing unit 106 performs this setting or changing to the WAN edge device 300 on the basis of the information collected by the quality information collecting unit 105 and stored in the source map unit 103.

1.2) User Control Device

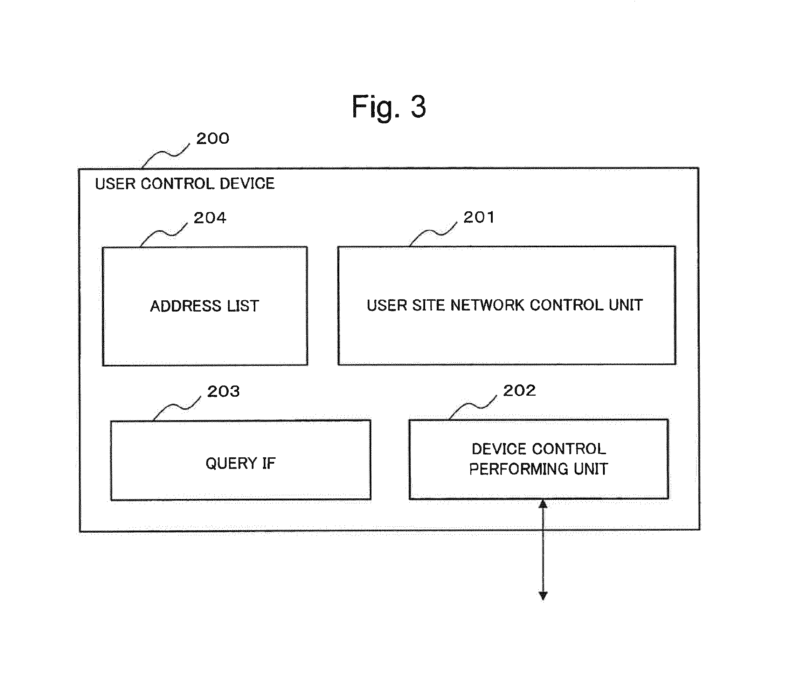

As illustrated in Fig. 3, the user control device 200 includes a user site network control unit 201, a device control performing unit 202, a query I/F 203, and an address list 204 of different user sites.

The user site network control unit 201 has a function necessary for controlling a network in a user site. The user site network control unit 201 controls, through the device control performing unit 202, the network including the user edge device 400. The user site is controlled in an arbitrary method.

The query I/F 203 of the user control device that transmits a query to the WAN 10 is used in monitoring a state of a currently connected path, or is used when new connection is requested to a different user site by referring to the address list 204 of other user sites, or is used for other purposes.

Functions achieved by the traffic guiding unit 101, the network analyzing unit 102, the source map unit 103, the topology constructing unit 104, the quality information obtaining unit 105, the device control performing unit 106, and the traffic amount obtaining unit 107 can be achieved by executing programs stored in a memory not illustrated by a computer of the WAN control device.

2. Operation

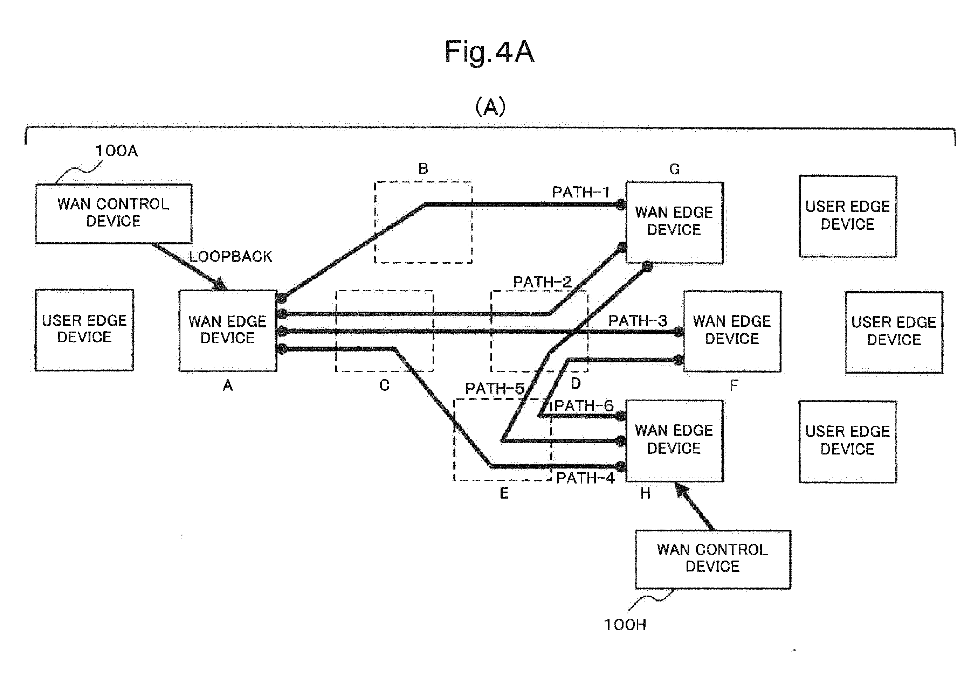

In the following, a method for creating information to be held by the source map unit 103 in the WAN control device 100 is described with reference to Fig. 4A to Fig. 8. The source map unit 103 holds at least configuration information of the WAN 10 changing in time, and information concerning a network state of the WAN 10. The source map unit 103 further holds information of one or a plurality of routes to all of the other user edge devices from the user edge device 400 for which the WAN edge device is provided. The source map unit 103 further holds information concerning quality of the respective routes. First, a procedure for constructing topology in the WAN 10 is described.

2.1) Topology Constructing Operation

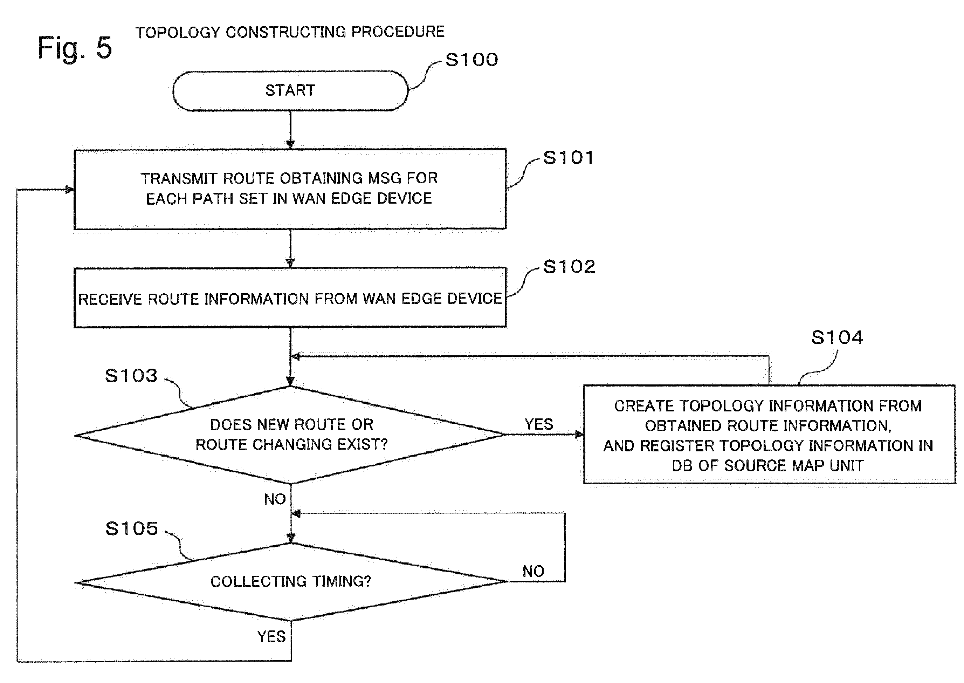

In Fig. 4A, it is assumed that each of the WAN edge device A and the WAN edge device H sets paths with the WAN edge devices at other user sites. In this example, it is assumed that a plurality of paths are set from the WAN edge device A to the different WAN edge devices F, G, and H. The topology constructing unit 104 of each WAN control device constructs topology information on the basis of route information of a plurality of the paths. In this example, description is made on the assumption that the WAN edge device A is controlled by the WAN control device 100A, and the WAN edge device H is controlled by the WAN control device 100H. Both of the WAN control devices 100A and 100H have the configuration illustrated in Fig. 2. For this reason, regarding the configuration block of each WAN control device, the symbol A or H is attached to each reference numeral to distinguish them from each other. In the following, the topology constructing procedure is described with reference to Fig. 5.

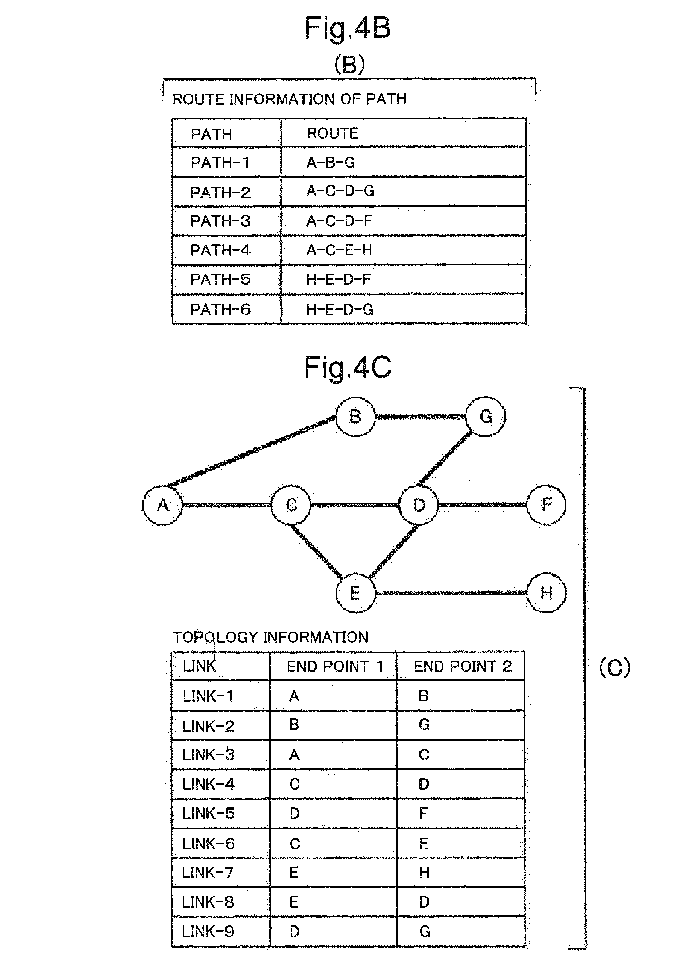

In Fig. 5, when the topology constructing procedure starts(step S100), the topology constructing unit 104A of the WAN control device 100A commands the WAN edge device A to send a message (Loopback message) for obtaining the route information concerning all of the paths connected to the other user sites (step S101). When the WAN edge device A receives the route information of the respective paths by the Loopback message, the WAN control device 100A obtains the route information from the WAN edge device A (step S102). For example, as illustrated in Fig. 4B, the path route information include PAth1 of the route A-B-G, Path2 of the route A-C-D-G, Path3 of the route A-C-D-F, Path4 of the route A-C-E-H, Path5 of the route H-E-D-G, and Path6 of the route H-E-D-F.

The topology constructing unit 104A determines whether the route information of each path indicates a new route or route change (step S103). When the route information indicates a new route or a route different from previously obtained route information (yes at step S103), the topology constructing unit 104A deletes overlapping nodes and links from the obtained route information that is new or changed, to create a topology configuration (step S104). Then, the topology constructing unit 104A registers the topology configuration in database (DB) of the source map unit 105 (step S104). One example of the thus-obtained topology information is illustrated in Fig. 4C. When a new route and route change no longer exists (no at the step S103), the procedure waits for a next collection timing (no at the step S105). When a next collection timing arrives (yes at the step S105), the procedure returns to the above-described step S101. This operation of updating the topology configuration is performed at each WAN control device at fixed intervals or when an event such as generation of a failure alarm occurs.

In the same manner, the above-described topology information updating operation is performed also in the WAN control device 100H connected to the WAN edge device H. The topology configuration that has been updated by each WAN edge device is shared by all of the WAN control devices by using the synchronizing function of the database of each source map unit 103.

2.2) Performance Information Updating Operation

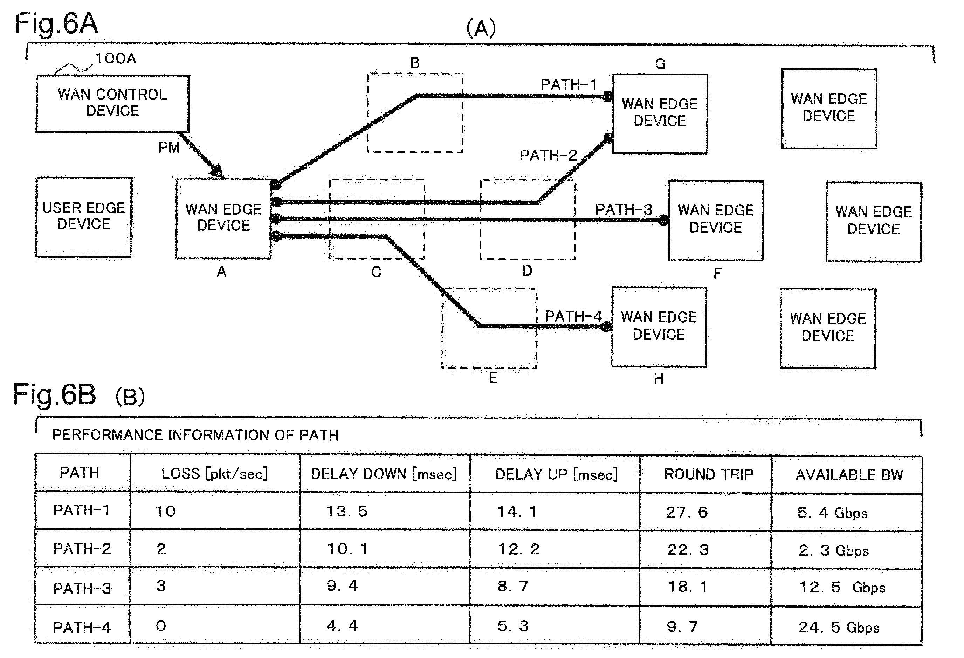

Next, a procedure of obtaining the performance information is described with reference to Fig. 6A to Fig. 7. In this example, as illustrated in Fig. 6A, description is made about the case where the WAN edge device A controlled by the WAN control device 100A is connected to the WAN edge devices G, F, and H.

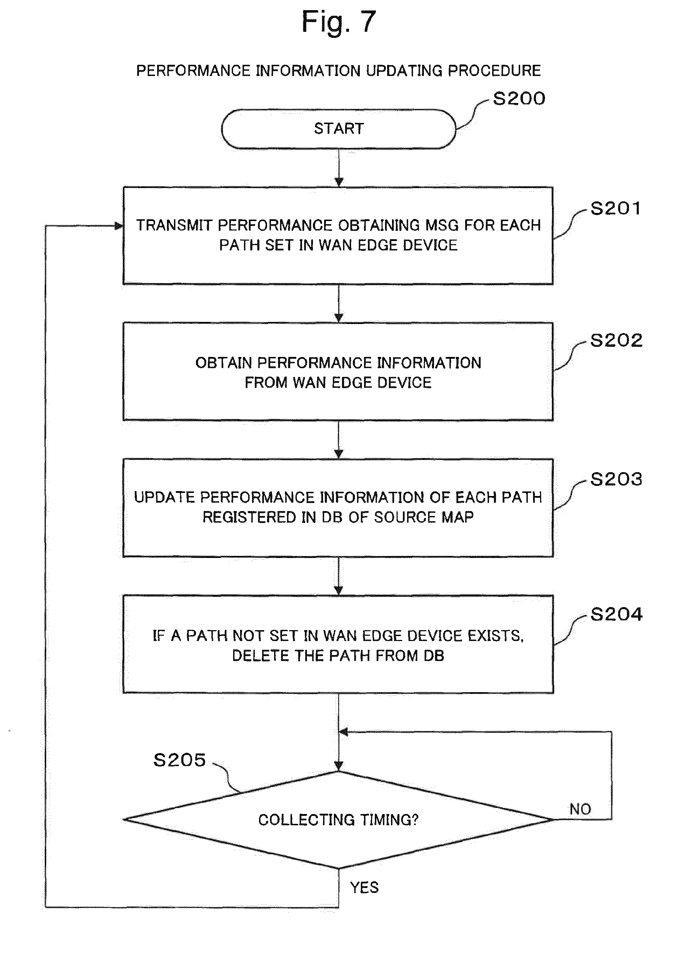

In Fig. 7, when the performance information obtaining procedure starts (step S200), the quality information obtaining unit 105A of the WAN control device 100A commands the WAN edge device A to send performance measuring messages for all of paths connected to the other user sites (step S201). When the WAN edge device A receives the performance information of each path by the performance measuring message, the quality information obtaining unit 105A of the WAN control device 100A obtains the performance information from the WAN edge device A (step S202). Then, the quality information obtaining unit 105A updates the database (DB) of the source map unit 103 by using the obtained performance information of each path (step S203). When there is a path of which performance information is not updated, this path is determined as a path that does not exist in the WAN 10, and is deleted from the database (DB) of the source map unit 103 (step S204). Subsequently, when a collection timing arrives (yes at step S205), the procedure returns to the above-described step S201. This operation of updating the performance information is performed at each WAN control device at fixed intervals or when an event such as generation of a failure alarm occurs. One example of the performance information of the paths is illustrated in Fig. 6B.

2.3) Vacant-Band Updating Operation

Lastly, description is made about a method in which by using the above-described topology information and path information, the network analyzing unit 102 of the WAN control device calculates a vacant band of each path.

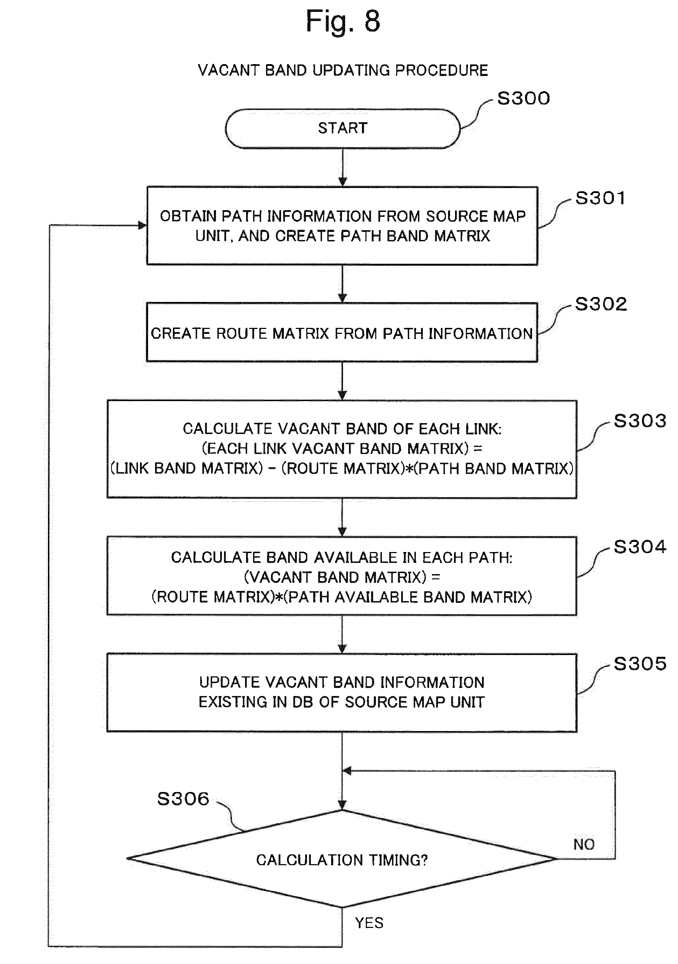

In Fig. 8, when starting the vacant-band updating operation (step S300), the network analyzing unit 102 obtains, from the source map unit 103, the path information set in the WAN 10 (step S301). Then, the network analyzing unit 102 creates a path band matrix of N x 1 ("N" is the number of paths) whose elements are bands used in the respective paths (step S301).

Next, the network analyzing unit 102 creates a route matrix of M x N ("M" is the number of links, and "N" is the number of paths) whose elements are the paths and the links and in which the element of the link through which the path passes is "1" (step S302). Then, the network analyzing unit 102 calculates a vacant band of each link by using the created path band matrix and route matrix, and a link band matrix (step S303). The link band matrix is a matrix of 1 x M whose elements are the maximum receivable bands of the respective links. For example, the calculation is performed by the following formula.

$$(\text{Each link vacant-band matrix}) = (\text{link band matrix}) - (\text{route matrix}) \times (\text{path band matrix})$$

Subsequently, the network analyzing unit 102 uses the obtained vacant band of each link, the route matrix, and an available band matrix of N x 1 to create the equation "(vacant band) = (route matrix) x (available band matrix)" (step S304). In the available band matrix, an element of the path for which a vacant band is calculated is set as "Xi" ("i" is an identifier of the path). The network analyzing unit 102 solves this equation by linear programming to calculate the band "Xi" available in each path (step S304). The network analyzing unit 102 uses the thus-calculated available band of each path to update available bands in the path information in the database (DB) of the source map unit 103 (step S305). Such a series of calculation are performed at previously determined time intervals (step S306).

2.4) Traffic Guide

As described above, the path information (topology information, quality information, and available band information) in the database (DB) of the source map unit 103 is updated on a timely basis. When user traffic transmission is requested from a user site, the traffic guiding unit 101 makes searching through the database (DB) of the source map unit 103 by using an address of the user site of the communication destination concerned, to determine one or a plurality of route candidates, and determine the transmittable route on the basis of information such as a requested band of the user traffic.

For example, when the path performance information as illustrated in Fig. 6B are stored in the database (DB), as paths from the WAN edge device A to the WAN edge device G, there are Path1 of the route A-B-G, and Path2 of the route A-C-D-G. In an example illustrated in Fig. 6B, although Path1 has a larger available band, Path2 has superior performance. Accordingly, when a traffic volume to the WAN edge device G requested by the user is smaller than the available capacity of Path2, selection of Path2 is advantageous. On the other hand, when the traffic exceeds the available capacity of Path2, the traffic guiding unit 104 switches the path of the user to Path1 so that the user traffic can be transmitted.

3. Advantageous Effect

As described above, the WAN control device according to the exemplary embodiment can continually obtain the latest WAN topology configuration and the latest network state such as quality by obtaining the quality information and the route information at fixed intervals. Thereby, it is possible to flexibly guide traffic of a user. Further, since switching of traffic is performed only by the WAN edge device, all of communication devices in the WAN 10 do not need to be controlled, and a path can be controlled at high speed.

More concretely, user traffic is flexibly guided in accordance with the network state. For this reason, a user using the VAN can transmit burst traffic without being bound by a contracted band, and band use efficiency in the WAN can be maximized. Further, all of communication devices on a route in the WAN do not need to be controlled, and it is sufficient to control the WAN edge device. For this reason, a network service can be provided swiftly in response to a request of a user, and control time can be greatly decreased.

4. Concrete Application Example

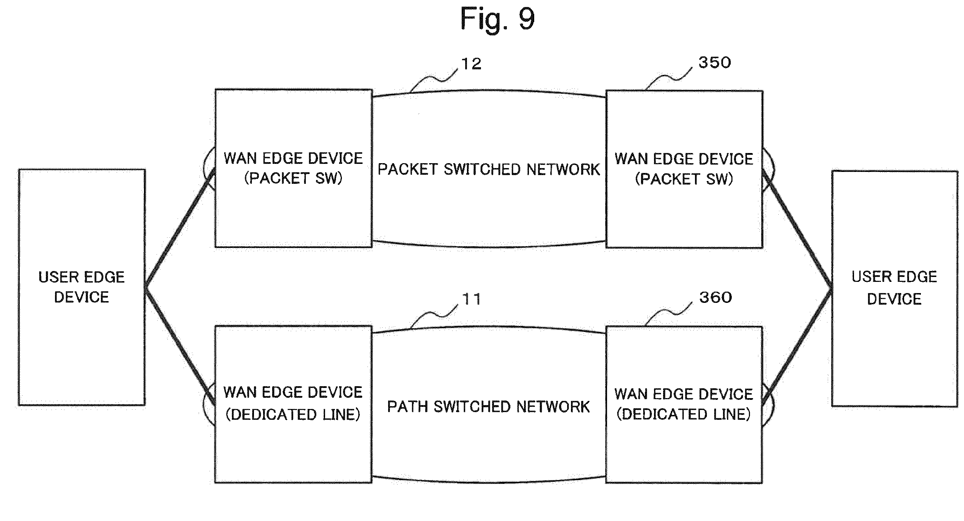

As illustrated in Fig. 9, the network control device according to the exemplary embodiment can be applied to a WAN edge device 360, which is connected to a path switched network 11 switching traffic by time slots or wavelength units of synchronous digital hierarchy (SDH) or the like, and a WAN edge device 350, which is connected to a packet network 12 that switches traffic by packet units. Thus, according to the exemplary embodiment, further, user traffic can be guided between the VPNs in the WANs the layers of which are different from each other.

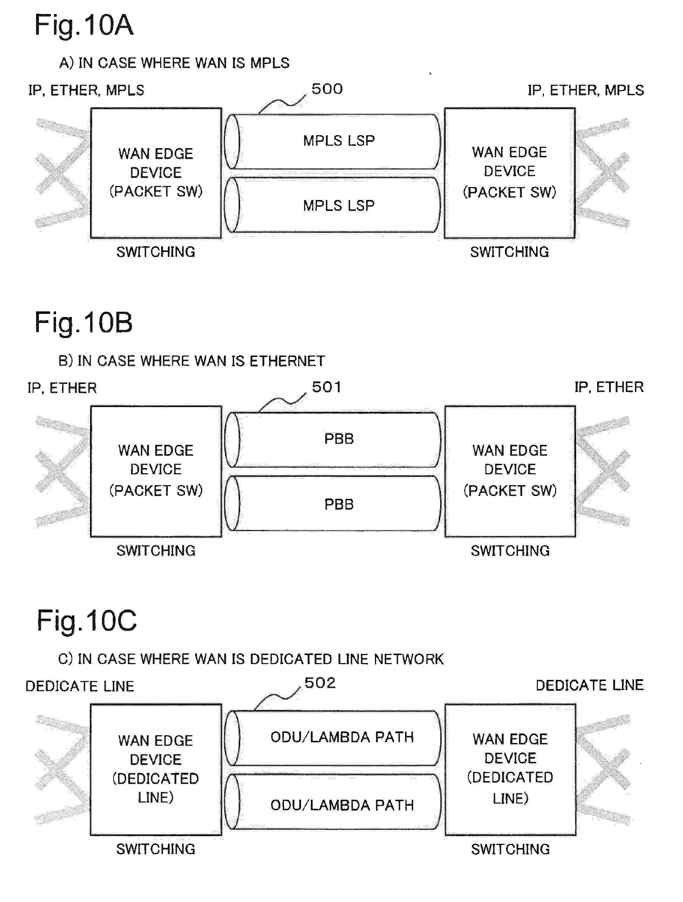

When the packet network 12 is an MPLS network 500 illustrated in Fig. 10A, the WAN control device according to the exemplary embodiment collects route information and performance information of MPLS label switched paths (LSPs) set in the WAN, and the WAN edge device performs control about which LSP is used for encapsulating IP, Ethernet, or MPLS traffic from a user.

When the packet network 12 is an Ethernet network 501 illustrated in Fig. 10B, the WAN control device according to the exemplary embodiment collects route information and performance information of Ethernets set in the WAN, and the WAN edge device encapsulates IP or Ethernet traffic from a user by using a mechanism of the provider backbone bridge (PBB) or the IEEE803.1 Q.

When the path switched network 11 is a dedicated line network 502 illustrated in Fig. 10C, the WAN control device according to the exemplary embodiment collects route information and performance information of ODU or wavelength paths set in the WAN, and the WAN edge device performs control about which ODU or wavelength path the port to be connected to a user site is connected.

Thus, according to the present invention, a plurality of network layers are integrated, and control can be made with a common mechanism. For this reason, the user control device can receive a communication service by using the optimum route without regard to quality and cost unique to network layers.

As described in the technical problem to be solved by the present invention, in a packet network, since a band is generally shared with other users, cost is low, yet it is difficult to guarantee communication quality. In a path switched network, since a band is occupied, quality is high, yet cost is high. When the present invention is applied, operation is performed such that information in the WAN is obtained from a WAN edge device that makes connection between user sites, and traffic between the user sites is guided. In other words, in a packet network, a state of a WAN network can be recognized in real time. For this reason, communication quality and an available band can be known in advance, and can be used for controlling application in the user site. In a path switched network, a path in a WAN is not occupied, and can be shared with a different user. For this reason, cost can be more reduced.

5. Supplementary Note

The whole or part of the exemplary embodiments disclosed above can be described as, but not limited to, the following supplementary notes.

(Supplementary note 1) A network control device that controls an edge device of a network connected to each of a plurality of user sites, the network control device including: network state collecting means for collecting a network state in the network through the edge device; and traffic guiding means for guiding, on the basis of the network state, traffic transmitted from a user site through the edge device to a specific route in the network or a specific receiving end.

(Supplementary note 2) The network control device according to the supplementary note 1, wherein the network state includes path route information indicating a route between the edge device and other edge devices, and path performance information and vacant-band information of the route.

(Supplementary note 3) The network control device according to the supplementary note 1 or 2, wherein the network control device provides the path performance information and/or the vacant-band information to the user site.

(Supplementary note 4) The network control device according to any one of the supplementary notes 1 to 3, wherein the network control device controls respective edge devices of a plurality of networks with layers different from each other, and the traffic guiding means guides the traffic to one of the plurality of networks.

(Supplementary note 5) A network control method for controlling an edge device of a network connected to each of a plurality of user sites, the network control method including: collecting, by network state collecting means, a network state in the network through the edge device; and guiding, by traffic guiding means, on the basis of the network state, traffic transmitted from a user site through the edge device to a specific route in the network or a specific receiving end.

(Supplementary note 6) The network control method according to the supplementary note 5, wherein the network state includes path route information indicating a route between the edge device and other edge devices, and path performance information and vacant-band information of the route.

(Supplementary note 7) The network control method according to the supplementary note 5 or 6, including providing the path performance information and/or the vacant-band information to the user site.

(Supplementary note 8) The network control method according to any one of the supplementary notes 5 to 7, including: controlling respective edge devices of a plurality of networks with layers different from each other; and guiding, by the traffic guiding means, the traffic to one of the plurality of networks.

(Supplementary note 9) A network system that connects a plurality of user sites to each other, the network system including: a plurality of edge devices respectively connected to the plurality of user sites; and a network control device that controls each of the plurality of edge devices, wherein the network control device collects a network state in the network through the edge device, and on the basis of the collected network state, guides traffic transmitted from a user site, through any of the edge devices to a specific route in the network or a specific receiving end.

(Supplementary note 10) The network system according to the supplementary note 9, wherein the network state includes path route information indicating a route between the edge device and other edge devices, and path performance information and vacant-band information of the route.

(Supplementary note 11) The network system according to the supplementary note 9 or 10, wherein the network system provides the path performance information and/or the vacant-band information to the user site.

(Supplementary note 12) The network system according to any one of the supplementary notes 9 to 11, wherein the network system controls the edge device of each of a plurality of networks with layers different from each other, and the traffic guiding means guides the traffic to one of the plurality of networks.

(Supplementary note 13) The network system according to the supplementary note 12, wherein the plurality of networks with layers different from each other include a packet network and a circuit switched network.

(Supplementary note 14) A program causing a computer to function as a network control device that controls an edge device of a network connected to each of a plurality of user sites, the program causing the computer to implement: a network state collecting function of collecting a network state in the network through the edge device; and a traffic guiding function of guiding, on the basis of the network state, traffic transmitted from a user site through the edge device to a specific route in the network or a specific receiving end.

(Supplementary note 15) A network system, in a wide area network (WAN) that provides a virtual private network (VPN) connecting a plurality of user sites to each other, wherein control devices controlling a plurality of WANs collect states in the WANs, share the collected states with each other, and on the basis of traffic states in the WANs, guide traffic transmitted from a user to a specific route in the WAN or a specific receiving end.

(Supplementary note 16) The network system according to the supplementary note 15, wherein a plurality of WAN control devices each includes: a topology constructing unit that collects information of the WANs from the WAN edge device and that creates a topology configuration; a quality obtaining unit that collects performance information of a plurality of paths set among the WAN edge devices; a source map unit that stores, in each WAN edge device, the constructed topology information and quality information of each path; a network analyzing unit that analyzes a state of a network on the basis of these information items; a traffic guiding unit that guides traffic in accordance with an analysis result; and a device control performing unit that controls the WAN edge device for guiding the traffic.

(Supplementary note 17) The network system according to the supplementary note 16, wherein the WAN control device includes a communication interface for communicating with a user control device controlling a network of a user site, and the network system provides, to the user site, the quality information of the path set in the WAN.

(Supplementary note 18) The network system according to the supplementary note 16 or 17, wherein the quality information is any one of one-way delay, round-trip delay, a packet loss rate, and existence or nonexistence of failure.

(Supplementary note 19) The network system according to the supplementary note 16, wherein the WAN control device includes a communication interface for communicating with a user control device controlling a network of a user site, and the network system provides, to the user site, vacant band information indicating a transmittable band in the path set in the WAN.

(Supplementary note 20) The network system according to any one of the supplementary notes 16 to 19, wherein the source map units of the plurality of WAN control devices hold network configurations and network states of the plurality of WANs including a packet network and a circuit switched network whose layers are different from each other, and the network system guides traffic transmitted from a user, via a communication interface with a user control device, between VPNs in the WANs whose layers are different from each other.

(Supplementary note 21) A network control device that controls a WAN providing a VPN connecting a plurality of user sites to each other, the network control device including: a topology constructing unit that collects information of the WAN, and creates a topology configuration; a quality obtaining unit that collects performance information of a plurality of paths set among WAN edge devices; a source map unit that stores, therein, constructed topology information and quality information of each path; a network analyzing unit that analyzes a state of a network on the basis of these information items; a traffic guiding unit that guides traffic in accordance with an analysis result; and a device control performing unit that controls the WAN edge device to guide the traffic.

(Supplementary note 22) The network control device according to the supplementary note 21, including a communication interface for communicating with a user control device controlling a network of the user site, wherein the network control device provides, to a user site, quality information of a path set in a WAN network.

(Supplementary note 23) The network control device according to the supplementary note 22, including a communication interface for communicating with a user control device controlling a network of the user site, wherein the network control device provides, to the user site, vacant band information indicating a transmittable band in a path set in a WAN network.

(Supplementary note 24) The network control device according to any one of the supplementary notes 20 to 23, wherein the source map unit in the network control device holds network configurations and network states of a plurality of WANs constituted by a packet network and a circuit switched network with layers different from each other, and the network control device guides traffic transmitted from a user, via a communication interface with a user control device, between VPNs in the WANs with layers different from each other.

(Supplementary note 25) A network control method for controlling a WAN providing a VPN that connects a plurality of user sites to each other, the network control method including: storing, in a database, topology information of the WAN, route information of a path, quality information of a path, and band information of a path; analyzing a state of a network by using these information items stored in the database; and guiding traffic in accordance with an analysis result.

(Supplementary note 26) The network control method according to the supplementary note 25, wherein communication interface means for communicating with a user control device that controls a network of a user site is provided, and the quality information and available band information of a path set in the WAN are released to the user site.

(Supplementary note 27) The network control method according to the supplementary note 26, wherein the quality information is any one of one-way delay, round-trip delay, a packet loss rate, and existence or nonexistence of failure.

[Industrial Applicability]

The present invention can be applied to use of a network control device or the like for a WAN that connects separated user bases with each other. Further, the present invention can be applied to use of a network information sharing system for sharing, with a user, a configuration and quality information of a wide network

[Reference Signs List]

| 10  | WAN                              |
| 11  | Path switched network            |
| 12  | Packet switched network          |
| 20  | User base/site                   |
| 100 | WAN control device               |
| 101 | Traffic guiding unit             |
| 102 | Network analyzing unit           |
| 103 | Source map unit                  |
| 104 | Topology constructing unit       |
| 105 | Quality information obtaining unit |
| 106 | Device control performing unit   |
| 107 | Traffic amount obtaining unit    |

| 108 | Query I/F |
| 200 | User control device |
| 201 | User network control unit |
| 202 | Device control performing unit |
| 203 | Query I/F |
| 204 | Address list |
| 300 | WAN edge device |
| 350 | WAN edge device (packet SW) |
| 360 | WAN edge device (dedicated line) |
| 400 | User edge device |

**Claims**

1. A network control device that controls an edge device of a network connected to each of a plurality of user sites, the network control device including:

   network state collecting means for collecting a network state in the network through the edge device; and
   traffic guiding means for guiding, on the basis of the network state, traffic transmitted from a user site through the edge device to a specific route in the network or a specific receiving end.

2. The network control device according to Claim 1, wherein the network state includes path route information indicating a route between the edge device and other edge devices, and path performance information and vacant-band information of the route.

3. The network control device according to Claim 1 or 2, wherein the network control device provides the path performance information and/or the vacant-band information to the user site.

4. The network control device according to any one of Claims 1 to 3, wherein the network control device controls respective edge devices of a plurality of networks with layers different from each other, and the traffic guiding means guides the traffic to one of the plurality of networks.

5. A network control method for controlling an edge device of a network connected to each of a plurality of user sites, the network control method including:

   collecting, by network state collecting means, a network state in the network through the edge device; and
   guiding, by traffic guiding means, on the basis of the network state, traffic transmitted from a user site through the edge device to a specific route in the network or a specific receiving end.

6. The network control method according to Claim 5, wherein the network state includes path route information indicating a route between the edge device and other edge devices, and path performance information and vacant-band information of the route.

7. The network control method according to Claim 5 or 6, including providing the path performance information and/or the vacant-band information to the user site.

8. The network control method according to any one of Claims 5 to 7, including: controlling respective edge devices of a plurality of networks with layers different from each other; and guiding, by the traffic guiding means, the traffic to one of the plurality of networks.

9. A network system that connects a plurality of user sites to each other, the network system including:

   a plurality of edge devices respectively connected to the plurality of user sites; and
   a network control device that controls each of the plurality of edge devices,
   wherein the network control device collects a network state in a network through the edge device, and on the basis of the collected network state, guides traffic transmitted from a user site through any of the edge devices to a specific route in the network or a specific receiving end.

**10.** A program causing a computer to function as a network control device that controls an edge device of a network connected to each of a plurality of user sites, the program causing the computer to implement:

a network state collecting function of collecting a network state in the network through the edge device; and
a traffic guiding function of guiding, on the basis of the network state, traffic transmitted from a user site through the edge device to a specific route in the network or a specific receiving end.

Fig. 1

## Fig. 2

**WAN CONTROL DEVICE** (100)

- TRAFFIC GUIDING UNIT (101)
- NETWORK ANALYZING UNIT (102)
- SOURCE MAP UNIT (103) — DB
- QUERY IF (108)
- TOPOLOGY CONSTRUCTING UNIT (104)
- QUALITY INFORMATION OBTAINING UNIT (105)
- DEVICE CONTROL PERFORMING UNIT (106)
- TRAFFIC AMOUNT OBTAINING UNIT (107)

# Fig. 3

USER CONTROL DEVICE 200

ADDRESS LIST 204

USER SITE NETWORK CONTROL UNIT 201

DEVICE CONTROL PERFORMING UNIT 202

QUERY IF 203

# Fig.4A

## (A)

EP 2 840 744 A1

# Fig.4B

(B)

ROUTE INFORMATION OF PATH

| PATH | ROUTE |
|---|---|
| PATH-1 | A-B-G |
| PATH-2 | A-C-D-G |
| PATH-3 | A-C-D-F |
| PATH-4 | A-C-E-H |
| PATH-5 | H-E-D-F |
| PATH-6 | H-E-D-G |

# Fig.4C

TOPOLOGY INFORMATION

| LINK | END POINT 1 | END POINT 2 |
|---|---|---|
| LINK-1 | A | B |
| LINK-2 | B | G |
| LINK-3 | A | C |
| LINK-4 | C | D |
| LINK-5 | D | F |
| LINK-6 | C | E |
| LINK-7 | E | H |
| LINK-8 | E | D |
| LINK-9 | D | G |

(C)

# Fig. 5    TOPOLOGY CONSTRUCTING PROCEDURE

S100 — START

S101 — TRANSMIT ROUTE OBTAINING MSG FOR EACH PATH SET IN WAN EDGE DEVICE

S102 — RECEIVE ROUTE INFORMATION FROM WAN EDGE DEVICE

S103 — DOES NEW ROUTE OR ROUTE CHANGING EXIST?

YES — S104 — CREATE TOPOLOGY INFORMATION FROM OBTAINED ROUTE INFORMATION, AND REGISTER TOPOLOGY INFORMATION IN DB OF SOURCE MAP UNIT

NO

S105 — COLLECTING TIMING?

NO

YES

## Fig.6A
(A)

## Fig.6B (B)

PERFORMANCE INFORMATION OF PATH

| PATH | LOSS [pkt/sec] | DELAY DOWN [msec] | DELAY UP [msec] | ROUND TRIP | AVAILABLE BW |
|--------|----------------|-------------------|-----------------|------------|--------------|
| PATH-1 | 10 | 13. 5 | 14. 1 | 27. 6 | 5. 4 Gbps |
| PATH-2 | 2 | 10. 1 | 12. 2 | 22. 3 | 2. 3 Gbps |
| PATH-3 | 3 | 9. 4 | 8. 7 | 18. 1 | 12. 5 Gbps |
| PATH-4 | 0 | 4. 4 | 5. 3 | 9. 7 | 24. 5 Gbps |

EP 2 840 744 A1

# Fig. 7

PERFORMANCE INFORMATION UPDATING PROCEDURE

```
        ( START )  ⌐S200

TRANSMIT PERFORMANCE OBTAINING MSG FOR EACH    ⌐S201
PATH SET IN WAN EDGE DEVICE

OBTAIN PERFORMANCE INFORMATION                 ⌐S202
FROM WAN EDGE DEVICE

UPDATE PERFORMANCE INFORMATION OF EACH PATH    ⌐S203
REGISTERED IN DB OF SOURCE MAP

IF A PATH NOT SET IN WAN EDGE DEVICE EXISTS,   ⌐S204
DELETE THE PATH FROM DB
```

S205

COLLECTING TIMING?          NO

YES

# Fig. 8

VACANT BAND UPDATING PROCEDURE

S300

START

S301

OBTAIN PATH INFORMATION FROM SOURCE MAP
UNIT, AND CREATE PATH BAND MATRIX

S302

CREATE ROUTE MATRIX FROM PATH INFORMATION

S303

CALCULATE VACANT BAND OF EACH LINK:
(EACH LINK VACANT BAND MATRIX) =
(LINK BAND MATRIX) − (ROUTE MATRIX)*(PATH BAND MATRIX)

S304

CALCULATE BAND AVAILABLE IN EACH PATH:
(VACANT BAND MATRIX) =
(ROUTE MATRIX)*(PATH AVAILABLE BAND MATRIX)

S305

UPDATE VACANT BAND INFORMATION
EXISTING IN DB OF SOURCE MAP UNIT

S306

CALCULATION TIMING?

NO

YES

Fig. 9

USER EDGE DEVICE

WAN EDGE DEVICE (PACKET SW) 350

PACKET SWITCHED NETWORK 12

WAN EDGE DEVICE (PACKET SW)

WAN EDGE DEVICE (DEDICATED LINE) 360

PATH SWITCHED NETWORK 11

WAN EDGE DEVICE (DEDICATED LINE)

USER EDGE DEVICE

# Fig.10A

A) IN CASE WHERE WAN IS MPLS

IP, ETHER, MPLS
500
IP, ETHER, MPLS

| WAN EDGE DEVICE (PACKET SW) | MPLS LSP | WAN EDGE DEVICE (PACKET SW) |

MPLS LSP

SWITCHING
SWITCHING

# Fig.10B

B) IN CASE WHERE WAN IS ETHERNET

IP, ETHER
501
IP, ETHER

WAN EDGE DEVICE (PACKET SW)
PBB
WAN EDGE DEVICE (PACKET SW)

PBB

SWITCHING
SWITCHING

# Fig.10C

C) IN CASE WHERE WAN IS DEDICATED LINE NETWORK

DEDICATE LINE
502
DEDICATE LINE

WAN EDGE DEVICE (DEDICATED LINE)
ODU/LAMBDA PATH
WAN EDGE DEVICE (DEDICATED LINE)

ODU/LAMBDA PATH

SWITCHING
SWITCHING

## INTERNATIONAL SEARCH REPORT

| International application No. |
| --- |
| PCT/JP2013/002507 |

**A. CLASSIFICATION OF SUBJECT MATTER**
*H04L12/721*(2013.01)i, *H04L12/66*(2006.01)i

According to International Patent Classification (IPC) or to both national classification and IPC

**B. FIELDS SEARCHED**

Minimum documentation searched (classification system followed by classification symbols)
H04L12/721, H04L12/66

Documentation searched other than minimum documentation to the extent that such documents are included in the fields searched

| | | | |
| --- | --- | --- | --- |
| Jitsuyo Shinan Koho | 1922–1996 | Jitsuyo Shinan Toroku Koho | 1996–2013 |
| Kokai Jitsuyo Shinan Koho | 1971–2013 | Toroku Jitsuyo Shinan Koho | 1994–2013 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | JP 2007-329549 A (Nippon Telegraph and Telephone Corp.), 20 December 2007 (20.12.2007), paragraphs [0018] to [0023] (Family: none) | 1-10 |
| Y | JP 2004-159146 A (Nippon Telegraph and Telephone Corp.), 03 June 2004 (03.06.2004), paragraphs [0021], [0022], [0041] to [0047] (Family: none) | 1-10 |

| ☒ Further documents are listed in the continuation of Box C. | ☐ See patent family annex. |
| --- | --- |

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
| --- | --- |
| 29 May, 2013 (29.05.13) | 11 June, 2013 (11.06.13) |

| Name and mailing address of the ISA/ | Authorized officer |
| --- | --- |
| Japanese Patent Office | |
| Facsimile No. | Telephone No. |

Form PCT/ISA/210 (second sheet) (July 2009)

23

**INTERNATIONAL SEARCH REPORT**

International application No.

PCT/JP2013/002507

C (Continuation).    DOCUMENTS CONSIDERED TO BE RELEVANT

| Category* | Citation of document, with indication, where appropriate, of the relevant passages | Relevant to claim No. |
|---|---|---|
| Y | JP 2007-529127 A  (Telefonaktiebolaget LM Ericsson (publ)), 18 October 2007 (18.10.2007), paragraph [0024] & US 2007/0060169 A1     & EP 1690372 A & WO 2005/055524 A1      & CN 1879353 A | 4,8 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012092798 A
- JP 2003338843 A
- JP 2011176467 A